**Europäisches Patentamt**

**European Patent Office**

**Office européen des brevets**

(19)

(11) Veröffentlichungsnummer : **0 081 640**
**B1**

(12) **EUROPÄISCHE PATENTSCHRIFT**

(45) Veröffentlichungstag der Patentschrift :
28.08.85

(21) Anmeldenummer : 82109142.8

(22) Anmeldetag : 04.10.82

(51) Int. Cl.⁴ : **B 61 C   9/52, F 16 D   3/00,**
**F 16 D   3/21**

(54) Doppelachsantrieb für Schienentriebfahrzeuge.

(30) Priorität : 14.12.81 DE 3149471

(43) Veröffentlichungstag der Anmeldung :
22.06.83 Patentblatt 83/25

(45) Bekanntmachung des Hinweises auf die Patenterteilung : 28.08.85 Patentblatt 85/35

(84) Benannte Vertragsstaaten :
AT BE CH DE FR GB IT LI NL SE

(56) Entgegenhaltungen :
DE-A- 1 916 445
DE-A- 2 601 516
DE-B- 1 198 615
DE-B- 1 206 218
FR-A- 1 049 411

(73) Patentinhaber : Thyssen Industrie AG
Am Thyssenhaus 1
D-4300 Essen (DE)

(72) Erfinder : Trost, Josef
Altstrasse 25
D-4300 Essen (DE)
Erfinder : Piepenbreier, Ernst
Wintgenstrasse 15
D-4300 Essen (DE)

(74) Vertreter : Eberhard, Friedrich, Dr.
Am Thyssenhaus 1
D-4300 Essen (DE)

EP 0 081 640 B1

## Beschreibung

Die Erfindung betrifft einen Doppelachsantrieb für Schienentriebfahrzeuge mit einem mit seiner Welle in Fahrtrichtung liegenden, im Drehgestellrahmen befestigtem Antriebsmotor, der auf den Radachsen angeordnete Winkelgetriebe, über miteinander drehelastisch verbundene Hälften aufweisende Gelenkkupplungen antreibt, wobei eine Drehmomentstütze zwischen Drehgestellrahmen und Getriebegehäusen derart angeordnet ist, daß die Gelenkkupplungen nur auf Torsion und Biegung beansprucht werden.

Aus der DE-A-26 01 516 ist ein derartiger Doppelachsantrieb bekannt, bei dem zwei Gummiblockkupplungen zwischen dem Antriebsmotor und den Winkelgetrieben angeordnet sind. Diese Anordnung weist zwar eine gewisse Winkelbeweglichkeit und Drehelastizität auf, nachteilig ist jedoch, daß wegen des gleichzeitigen Wirkens von Drehmoment und Fliehkraft die Vorspannung der einzelnen Gummiblöcke sehr groß sein muß. Dies erschwert die Montage. Trotz der großen Vorspannung ergibt sich mit steigender Drehzahl eine steigende Unwuchtkraft, die wegen des ungleichmäßigen Setzvorganges des Gummis undefinierbar ist und so zu einem Unsicherheitsfaktor wird. Hinzu kommt, daß die große Vorspannung die Rückstellkräfte aus den Winkellagen vergrößert und die Drehelastizität beeinträchtigt.

Der Erfindung liegt die Aufgabe zugrunde, eine Kupplung der eingangs genannten Art anzugeben, die sehr winkelbeweglich ist, vorspannungsfrei montierbar ist und die in allen Drehzahlbereichen, also auch in den Drehzahlbereichen für die Drehstromantriebstechnik, einwandfrei zentriert läuft. Sie soll dabei Robustheit und lange Lebensdauer aufweisen, wie sie für Schienentriebfahrzeuge gefordert wird. Ihre Drehelastizität soll für sich beherrschbar sein, ohne daß die anderen Kupplungseigenschaften mit beeinflußt werden.

Die Aufgabe wird dadurch gelöst, daß jede Gelenkkupplung als Kugelkupplung mit zumindest je einer Kugelreihe in den beiden Kupplungshälften ausgebildet ist, zwischen denen ein die Drehelastizität gewährendes und auf einer der Kupplungshälften zentriertes Zentrierelement angeordnet ist, das mit der anderen Kupplungshälfte über einen mit einer Gleitbüchse versehenen Zentrierbolzen in radialer Richtung und über einen Gleitscheiben enthaltenden Mittelabschnitt in axialer Richtung in Verbindung steht.

Durch die DE-B-1 206 218 ist zwar eine Kugelkupplung bekannt, die mit ihrer je einen Kugelreihe in den beiden Kupplungshälften als Doppelkupplung ausgebildet ist und deren zwei Hälften am Umfang durch einen dazwischenliegenden, einfachen Ring zentriert sind. Diese Kupplung verhält sich jedoch in Drehrichtung starr.

Andererseits ist auch eine drehelastische Gelenkwelle durch die DE-A-1 916 445 bekannt, deren einer Wellenteil — unter Aufrechterhaltung der Gelenkigkeit — mit einem Zentrierbolzen in den anderen Wellenteil hineinragt und eine Glocke aufweist, die den anderen Wellenteil überragt und mit ihm durch einen scheibenförmigen Gummikörper verbunden ist. Eine derartige Konstruktion ist bei der Anwinkelung der Wellenteile nicht frei von Rückstellkräften.

Durch die Ausbildung der Gelenkkupplungen als Kugelkupplungen ergibt sich für die Erfindung eine Ausführung, die große Auslenkungen erlaubt, schon während der Montage rückstellkraftfrei ist und trotz der in der Umfangsrichtung wirkenden Formschlüssigkeit der drehmomentübertragenden Kugelreihen mit ihren Laufbahnen drehelastisch ist dank der entsprechenden Ausbildung des Zentrierelementes. Bei der Erfindung sind die Mittel zum Herbeiführen der Drehelastizität und der Winkelbeweglichkeit der Wellen voneinander vorteilhaft getrennt, so daß sie frei optimiert werden können. Das Zentrielement gewährt den beiden wellenenden eine einwandfreie Zentrierung, die auch bei hohen Drehzahlen keine Unwucht verursacht. Es ist auf der einen Kupplungshälfte herkömmlich zentriert, während auf der anderen Kupplungshälfte durch den Zentrierbolzen außen freier Raum für ein drehelastisches Element zur Verfügung steht. Durch den Einbau von Gleitkörpern können sich die beiden Kupplungshälften gegeneinander bewegen, ohne daß es zum Auftreten von Reibungsrost etc. kommt. Trotzdem ist eine genaue axiale und radiale Führung gegeben. So ergibt sich eine Funktion der Kupplung, die festverschraubten Flanschteilen bezüglich des zentrierten Laufs nicht nachsteht, die aber gleichwohl eine Drehbeweglichkeit der einzelnen Kupplungshälften gegeneinander erlaubt. Mit der Erfindung ist praktisch eine Doppelkupplung geschaffen, deren zwei Hauptteile oder auch Kupplungshälften sich nebeneinander befinden.

In weiterer Ausgestaltung der Erfindung ist vorgesehen, daß im Zentrierelement zum Übertragen des Drehmomentes zumindest ein elastischer Ring, vorzugsweise aus Gummi, angeordnet ist. Durch den elastischen Ring, der vorzugsweise aus Gummi besteht um die Selbstdämpfungseigenschaften des Gummis auszunutzen, ist die jeweils gewünschte Drehelastizität leicht einstellbar. Denn ein Ring, der um den Zentrierbolzen herum angeordnet sein kann, besitzt vorteilhaft ein großes Volumen und kann vorspannungslos mit dem Zentrierelement verbunden werden. So ist auch die gewünschte leichte Montage und Demontage möglich. Darüberhinaus ergeben sich auch bei hohen Drehzahlen keinerlei Unwuchten, da der elastische Ring problemlos in dem Zentrierelement angeordnet werden kann.

In weiterer Ausgestaltung der Erfindung ist vorgesehen, daß eine Kupplungshülse der zentrierbolzenseitigen Kupplungshälfte zweiteilig ausgebildet ist und daß zwischen den beiden Teilen die axial wirkenden Gleitscheiben angeordnet sind. So ergibt sich eine vorteilhafte formschlüssige und gleichzeitig drehbewegliche Verbindung der beiden Kupplungshälften. Die axiale Lage aller Teile der erfindungsgemäßen Kupplung zueinander ist damit vollständig ebenso sicher fixiert, wie die radiale Lage, die durch die Gleitbüchse festgelegt wird.

Die Erfindung wird nachfolgend anhand von Zeichnungen näher erläutert, die ein besonders bevorzugtes Ausführungsbeispiel zeigen und aus denen weitere vorteilhafte Einzelheiten entnehmbar sind.

Die Zeichnungen zeigen im einzelnen :

Figur 1 Ein schematisiert dargestelltes Drehgestell mit Antriebsmotor und zwei erfindungsgemäßen Kupplungen und

Figur 2 eine auf Wellenenden sitzende Kupplung mit Gleitkörpern und elastischem Drehmomentübertragungsring, der oberhalb und unterhalb der Wellenenden in unterschiedlichen Ausführungsformen dargestellt ist.

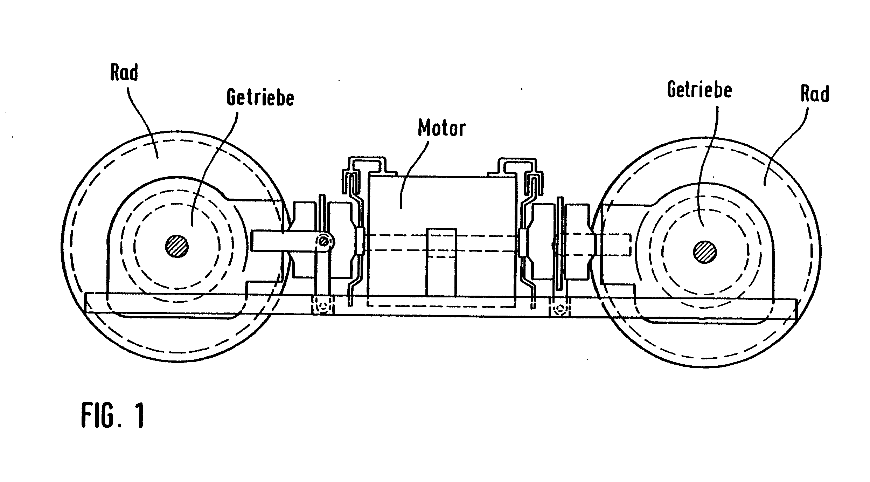

In Fig. 1 sind die Grund-Bestandteile eines Doppelachsantriebs für Schienentriebfahrzeuge direkt bezeichnet. Zwischen den beiden Radpaaren mit auf den Radachsen befindlichen Winkelgetrieben ist mittig im Drehgestell der elastisch gelagerte Motor angeordnet. Die Winkelgetriebe sind mit dem Motor jeweils über eine erfindungsgemäße Kupplung verbunden.

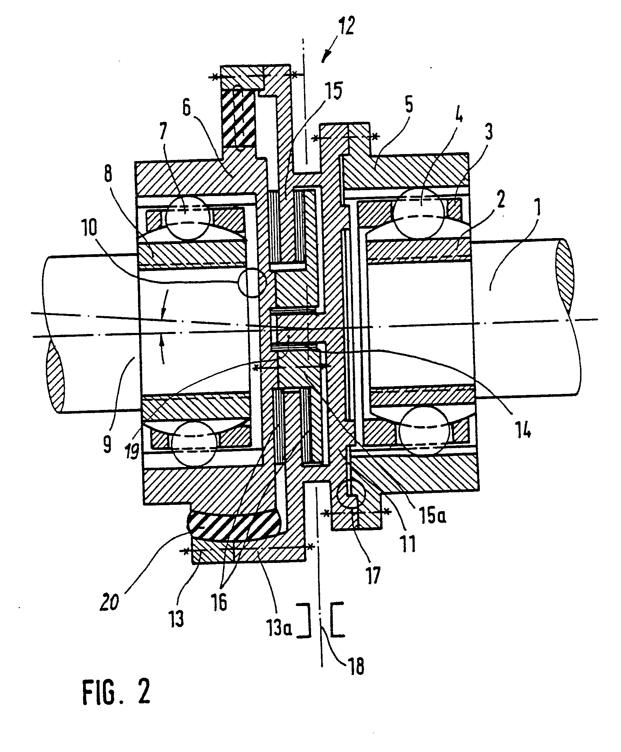

In Fig. 2 bezeichnet 1 das eine Wellenende, das die eine Nabe 2 einer Kugelkupplung trägt. 4 bezeichnet die den in dem Käfig 3 geführte Kugelreihe und 5 die auf der Kugelreihe 4 zentrierte äußere Kupplungshülse. Die Kugelkupplungshälfte auf dem Wellenende 1, bestehend aus den Teilen 2, 3, 4 und 5 ist mit dem Wellenende 1 über ein nicht näher gezeigtes Verbindungselement, z. B. ein Zahnwellenprofil, ein Keilwellenprofil oder eine Paßfeder verbunden, also durch ein Verbindungselement, das nicht zu einer Aufweitung der Nabe 2 führt.

An die Kugelkupplungshälfte auf dem Wellenende 1 schließt sich ein Zentrierelement 12 an, das eine Zentrierscheibe 11 aufweist, die in der Schulter 17 in der Kupplungshülse 5 zentriert ist. An die Zentrierscheibe 11 schließt sich ein Mittelabschnitt 15 an, in dem sich ein Zentrierbolzen 19 mit einer Gleitbüchse 14, oder auch Führungsbüchse und flache Gleitscheiben 16 auf beiden Seiten eines Axial-Führungssteges befinden. Außen trägt der Mittelabschnitt 15 einen Aufnahmering 13a, 13, der ein elastisch wirkendes Drehmomentübertragungselement z. B. einen Ring 20 aus Gummi umschließt und so zuverlässig auch bei hohen Drehzahlen fixiert.

Auf dem Wellenende 9 befindet sich die andere Kugelkupplungshälfte, die der ersten Kugelkupplungshälfte entspricht. Auch sie besteht aus einer Kupplungshülse 6, einer Kugelreihe 7 und einer Nabe 8, die ebenfalls durch nicht gezeigte Verbindungselemente mit dem Wellenende 9 verbunden ist. Das Wellenende 9 weist einen Abstand entsprechend 10 zum Innenteil der Nabe 6 auf, um einen Längenausgleich zu ermöglichen. Die axiale Fixierung der Kupplungshülse 6 erfolgt über den drehelastischen Gummiring 20, dessen Längsführungskraft ausreicht. Der Gummiring 20 kann im Querschnitt rechteckig, ebenso aber auch sphäroidal ausgebildet sein oder sogar einen runden Querschnitt aufweisen. Der äußere Aufnahmering 13, 13a ist, um eine Montage zu ermöglichen, geteilt. Die beiden Teile sind mitander verschraubt.

In Punkt 18 erfolgt die Anlenkung der Drehmomentstütze. Die mögliche Schwenkbewegung der Wellen ist durch die Schwenkpfeile angedeutet.

## Patentansprüche

1. Doppelachsantrieb für Schienentriebfahrzeuge mit einem, mit seiner Welle in Fahrtrichtung liegenden, im Drehgestellrahmen befestigten Antriebsmotor, der auf den Radachsen angeordnete Winkelgetriebe über miteinander drehelastisch verbundene Hälften aufweisende Gelenkkupplungen antreibt, wobei eine Drehmomentstütze zwischen Drehgestellrahmen und Getriebegehäusen derart angeordnet ist, daß die Gelenkkupplungen nur auf Torsion und Biegung beansprucht werden, dadurch gekennzeichnet, daß jede Gelenkkupplung als Kugelkupplung mit zumindest je einer Kugelreihe (4) in den beiden Kupplungshälften ausgebildet ist, zwischen denen ein die Drehelastizität gewährendes und auf einer der Kupplungshälften zentriertes Zentrierelement (12) angeordnet ist, das mit der anderen Kupplungshälfte über einen mit einer Gleitbüchse (14) versehenen Zentrierbolzen (19) in radialer Richtung und über einen Gleitscheiben (16) enthaltenden Mittelabschnitt (15) in axialer Richtung in Verbindung steht.

2. Antrieb nach Anspruch 1 dadurch gekennzeichnet, daß im Zentrierelement (12) zum Übertragen des Drehmomentes zumindest ein elastischer Ring (20), vorzugsweise aus Gummi, angeordnet ist

3. Antrieb nach Anspruch 1 oder 2 dadurch gekennzeichnet, daß der elastische Ring (20) vorspannungslos über Schraubverbindungen mit dem Zentrierelement (12) verbunden ist.

4. Antrieb nach einem der vorhergehenden Ansprüche, dadurch gekennzeichnet, daß eine Kupplungshülse (6) der zentrierbolzenseitigen Kupplungshälfte zweiteilig ausgebildet ist und daß zwischen den beiden Teilen (6, 15a) die axial wirkenden Gleitscheiben (16) angeordnet sind.

## Claims

1. Double axe drive dor rail traction vehicules, with a drive motor which is secured in the bogie frame, has its shaft situated in the direction of travel, and which drives bevel gearing units arranged on the wheel axles by means of articulated joint couplings having coupling halves connected in torsionally elastic manner to one

another, a torque support being so arranged between bogie frame and gearing housings that the articulated joint couplings are subjected only to bending and torsional stresses, characterised in that each articulated joint coupling is constructed as a ball coupling with at least one ball row (4) in each of the two coupling halves, between which there is arranged a centring element (12) which allows torsional elasticity and is centred on one of the coupling halves and which is connected to the other coupling half in the radial direction by means of a centring pin (19) provided with a sliding sleeve (14) and in the axial direction by means of a central portion (15) which comprises sliding discs (16).

2. Drive according to claim 1, characterised in that at least one elastic ring (20) made preferably of rubber is arranged in the centring element (12), for transmitting torque.

3. Drive according to claim 1 or 2, characterised in that the elastic ring (20) is connected to the centring element (12) without preload by means of screwed connections.

4. Drive according to one of the preceding claims. Characterised in that a coupling sleeve (6) of the coupling half at the centring pin side is made in two parts, and that the axially operating sliding discs (16) are arranged between the two parts (6, 15a).

**Revendications**

1. Commande à essieux jumelés pour véhicules moteurs sur rails, comportant un moteur dont l'arbre est orienté dans la direction de marche, qui est fixé dans le châssis du bogie et qui entraîne des engrenages d'angle montés sur les essieux, par l'intermédiaire d'accouplements articulés présentant deux moitiés réunies de manière élastique en rotation, un support de couple étant placé entre le châssis du bogie et les carters d'engrenage de façon telle que les accouplements articulés travaillent seulement à la torsion et la flexion, caractérisée par le fait que chaque accouplement articulé est un accouplement à billes comportant au moins une rangée de billes (4) dans chacun des demi-accouplements, entre lesquels est placé un élément de centrage (12), donnant l'élasticité en rotation et centré sur un des demi-accouplements, qui est rénuni à l'autre demi-accouplement, en direction radiale, par un doigt de centrage (19) pourvu d'une douille de coulissement (14) et, en direction axiale, par une partie médiane (15) contenant un disque de glissement (16).

2. Commande selon la revendication 1, caractérisée par le fait que, dans l'élément de centrage (12), est placée, pour la transmission du couple, au moins une bague élastique (20) de préférence en caoutchouc.

3. Commande selon l'une des revendications 1 et 2, caractérisée par le fait que la bague élastique (20) est liée sans précontrainte à l'élément de centrage (12) par des liaisons à vis.

4. Commande selon l'une des revendications précédentes, caractérisée par le fait qu'un manchon d'accouplement (6) du demi-accouplement situé du côté du doigt de centrage est en deux parties et que les disques de glissement (16) agissant axialement sont placés entre les deux parties (6, 15a).

Rad Getriebe Motor Getriebe Rad

FIG. 1

0 081 640

FIG. 2